(19) **Europäisches Patentamt / European Patent Office / Office européen des brevets**

(11) **EP 1 847 308 A1**

(12) **DEMANDE DE BREVET EUROPEEN**

(43) Date de publication:
**24.10.2007 Bulletin 2007/43**

(51) Int Cl.:
*B01D 15/18* (2006.01)     *B01J 8/04* (2006.01)
*G01N 30/44* (2006.01)     *G01N 30/46* (2006.01)

(21) Numéro de dépôt: **07290469.1**

(22) Date de dépôt: **17.04.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **21.04.2006 FR 0603690**

(71) Demandeur: **IFP**
**92852 Rueil-Malmaison Cédex (FR)**

(72) Inventeurs:
• **Wolff, Luc**
  **69970 Chaponnay (FR)**
• **Leinekugel Le Cocq, Damien**
  **69007 Lyon (FR)**

(54) **Dispositif expérimental pour l'étude et l'extrapolation de procédés en lit mobile simulé réactif**

(57)     L'invention concerne un dispositif expérimental original pour l'étude et la validation de procédés en lit mobile simulé réactif, ainsi que la méthode permettant l'exploitation des résultats issus dudit dispositif.

Ce dispositif est constitué d'une ou deux colonnes et d'une pluralité de bacs de stockage.

Figure 1

**Description**

DOMAINE DE L'INVENTION

L'invention s'inscrit dans le domaine des outils expérimentaux permettant l'étude des procédés de séparation, éventuellement avec réaction chimique, mis en oeuvre en lit mobile simulé réactif.

Rappelons que le lit mobile simulé est un réacteur en lit fixe comportant une pluralité d'entrées (pour la charge et l'éluant) et de sorties (pour l'extrait et le raffinat) réparties sur toute sa longueur, qui sont régulièrement décalés au cours du temps en respectant leurs positions relatives, de manière à balayer l'ensemble des positions possibles et créer de la sorte un déplacement fictif du lit, d'où l'appellation de lit mobile simulé. On trouvera par exemple une description détaillée du concept de lit mobile simulé dans le brevet FR 2 721 528. Le lit mobile simulé est notamment employé dans l'industrie pétrochimique pour la séparation par exemple des xylènes, des n-paraffines en mélange avec des hydrocarbures branchés et aromatiques, des oléfines en mélange avec des paraffines. Le lit mobile simulé est aussi employé dans d'autres industries comme par exemple celle du sucre, et depuis quelques années dans l'industrie pharmaceutique. Tous les procédés en lit mobile simulé sont concernés par la présente invention.

EXAMEN DE L'ART ANTERIEUR

L'intégration d'une réaction équilibrée conduisant à un ou plusieurs produits (par ex. A⇔B ou A(+B)⇔C+D), catalysée par un catalyseur hétérogène, au sein d'une unité de séparation par adsorption en lit mobile simulé est bien connue de l'art antérieur.

Dans le cas d'une réaction de type A(+B)⇔C+D donnant deux produits séparés par adsorption, on peut mentionner l'article publié par Lode et al. (2001, Chem. Eng. Sci., vol. 56, pages 269-291) qui expose la mise en oeuvre d'un lit mobile simulé à l'échelle du laboratoire, appliquée à l'estérification d'acide acétique par du méthanol pour produire de l'acétate de méthyle. Dans ce cas, catalyseur et adsorbant sont mélangés dans les lits de l'unité.

Dans le cas le cas d'une réaction de type A⇔B, on peut citer par exemple l'article publié par Hashimoto et al. en 1983 dans la revue de Biotechnologie et de Bioengenierie, (vol. 25, pages 2371-2393), dans lequel se trouve exposée la mise en oeuvre du lit mobile simulé réactif appliquée à l'isomérisation du glucose en fructose, et à l'isomérisation des xylènes en paraxylène.

Plusieurs documents de l'art antérieur décrivent la mise en oeuvre de procédés en lit mobile simulé réactif pour une application particulière.

Par exemple le brevet US 5,449,696 décrit un procédé en lit mobile simulé réactif dans lequel adsorbant et catalyseur sont mélangés, le procédé étant appliqué à la production de méthanol à partir de monoxyde de carbone et d'hydrogène.

Le brevet US 6,005,153 décrit un procédé de transalkylation d'un alkylaromatique à 9 ou 10 atomes de carbone pour produire au moins un alkylaromatique à 8 atomes de carbone, en lit mobile simulé réactif dans lequel adsorbant et catalyseur sont mélangés.

Aucun des documents cités ne fournit d'informations concernant un dispositif expérimental permettant d'étudier à une échelle pilote le procédé revendiqué.

De manière générale, les documents décrivant un montage expérimental pour l'étude de procédé en lit mobile simulé réactif, aussi bien pour des réactions conduisant à un seul produit (par ex. A⇔B) que pour des réactions conduisant à plusieurs produits (par ex. A(+B) ⇔ C+D), font apparaître une grande complexité de l'outil expérimental utilisé, notamment en terme de nombre de colonnes, et une limitation de l'outil expérimental à une application bien particulière ou à un type de réaction particulière (A⇔B ou A(+B)⇔C+D).

Plusieurs documents de l'art antérieur décrivent des unités composées d'une seule colonne, dont le comportement est comparable à celui d'un lit mobile simulé.

Les articles publiés par Abunasser et al. (2003, Ind. Eng. Chem. Research., vol. 42, pages 5268-5279) et par Abunasser et Wankat (2004, Ind. Eng. Chem. Research., vol. 43, pages 5291-5299) décrivent un système dit "One-Column", c'est à dire à colonne unique dans lequel la colonne suit le cycle classique du lit mobile simulé, à ceci près que le fluide obtenu en sortie de colonne est stocké dans un bac avant d'être réinjecté en entrée de colonne.

Dans ces documents, le comportement du système à colonne unique est comparé à celui d'un lit mobile simulé.

Il y est notamment montré que les deux systèmes ont des comportements similaires lorsque l'on utilise un grand nombre de bacs de stockage de fluide.

L'article publié par Mota et Araùjo (2005, AICHE Journal, vol. 51, pages 1641-1653) décrit une variante de ce système, utilisant un tube de stockage dans lequel le fluide s'écoule selon un écoulement piston, permettant de s'approcher du comportement du procédé de lit mobile simulé.

Ces références décrivent donc un dispositif ne comprenant qu'une colonne et une pluralité de bacs de stockage intermédiaires permettant de recycler de façon périodique et décalée dans le temps l'effluent de la sortie de la colonne à l'entrée de cette dernière afin de simuler un contre-courant. En revanche, les auteurs ne suggèrent aucune mise en oeuvre de ce système pour l'étude des procédés en lit mobile simulé réactif. Les auteurs comparent les performances de leur dispositif à colonne unique avec celles du lit mobile simulé afin d'optimiser les paramètres opératoires de leur dispositif à colonne unique, l'objectif étant que ledit dispositif puisse atteindre des performances similaires à celles du lit mobile simulé.

La présente invention décrit un nouveau dispositif expérimental permettant d'étudier les procédés en lit mobile simulé réactif en utilisant au plus deux colonnes, quelque soit le type de réaction mise en oeuvre.

Ainsi, le présent dispositif présente l'avantage par rapport à l'art antérieur d'être constitué d'un faible nombre d'équipement, tout en permettant la mise en oeuvre de tout type de réactions.

## DESCRIPTION SOMMAIRE DES FIGURES

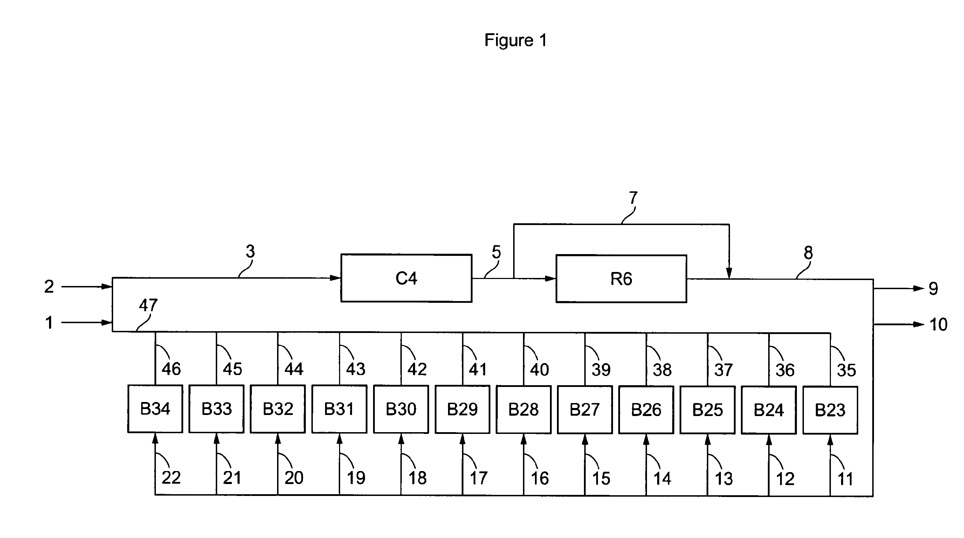

La figure 1 représente un schéma du dispositif selon la première variante de l'invention, pour des réactions équilibrées conduisant à un unique produit ou à plusieurs produits.

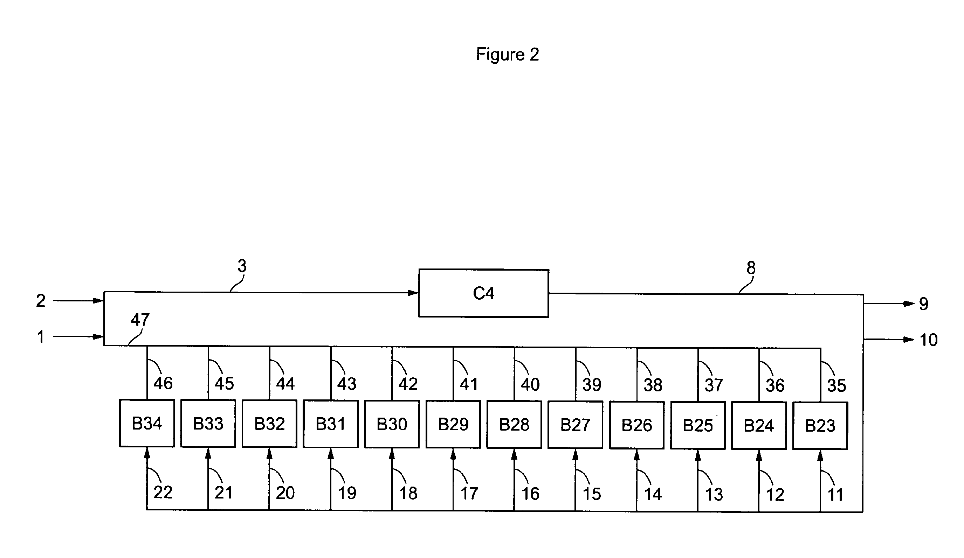

La figure 2 représente un schéma du dispositif selon la seconde variante de l'invention, pour tout type de réactions équilibrées conduisant à plusieurs produits. Les numéros des flux et des organes sont les mêmes sur les figures 1 et 2 lorsqu'ils désignent des flux ou des organes similaires, au sens où ils occupent les mêmes positions dans les deux figures.

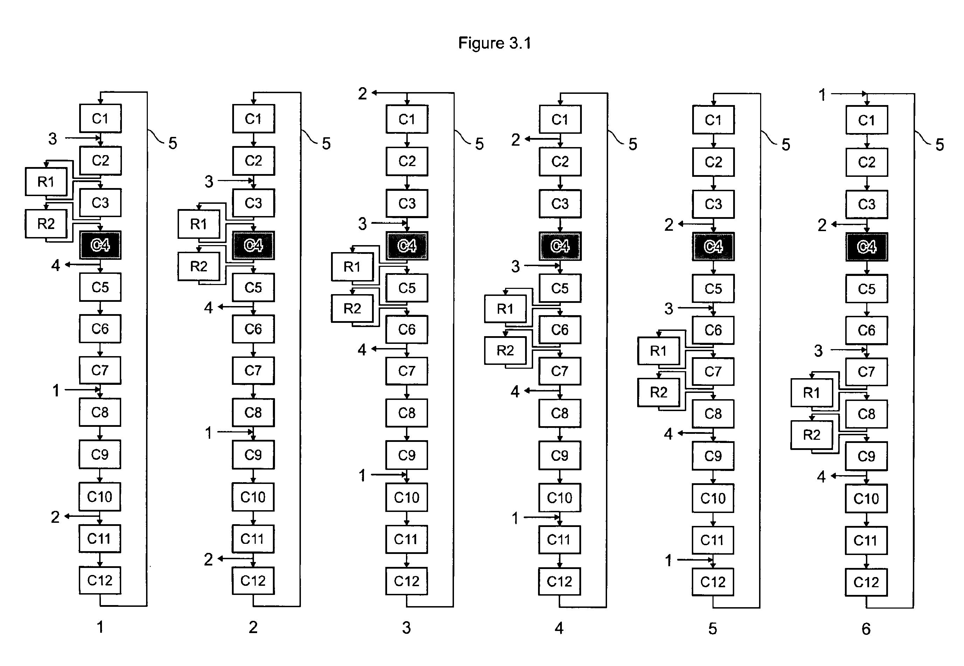

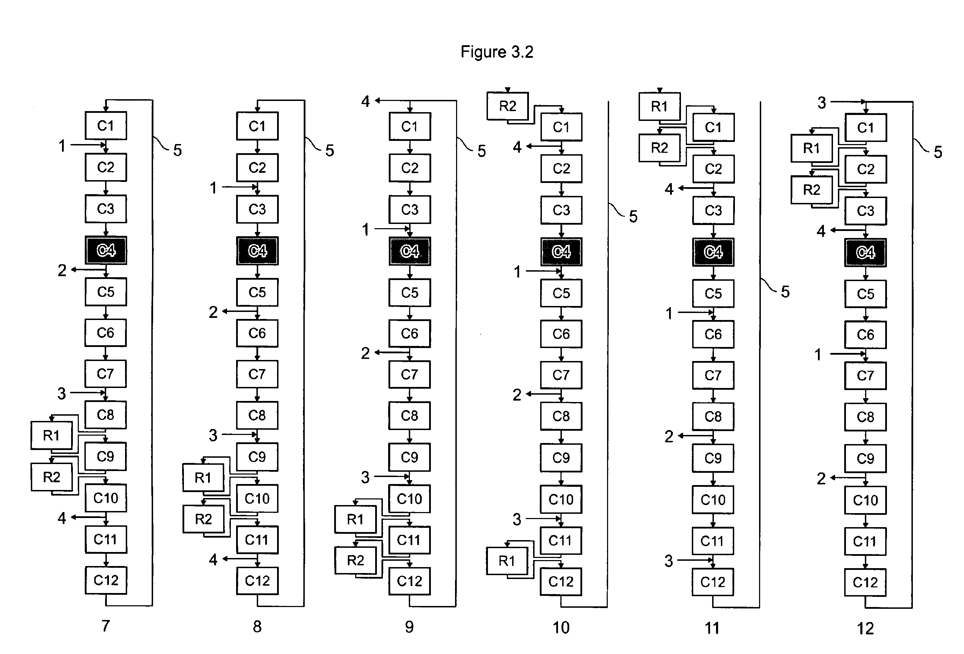

Les figures 3.1 et 3.2 représentent le principe de fonctionnement d'une unité en lit mobile simulé réactif dont on cherche à modéliser le comportement au moyen du dispositif selon l'invention dans sa première variante. Cette unité comprend 12 lits d'adsorbant (notés de C1 à C12) et 2 lits de catalyseur (notés R1 et R2). Cette unité est spécifiquement adaptée au cas d'une réaction conduisant à un unique produit (par ex. A ⇔ B) que l'on cherche à récupérer pur dans l'extrait (E).

Les 12 étapes du cycle ont été représentées et numérotées de 1 à 12 sous chaque étape. Le passage d'une étape à la suivante consiste à décaler d'un lit les points d'injection de charge (C) et d'éluant ( ou désorbant) (S) et les points de soutirage de l'extrait ( E) et du raffinat (R).

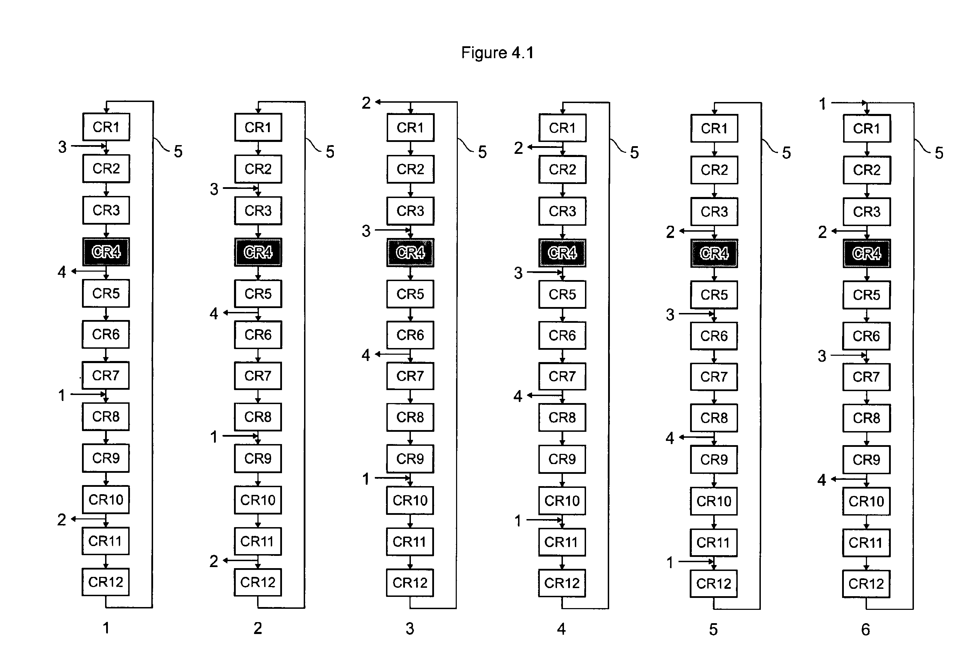

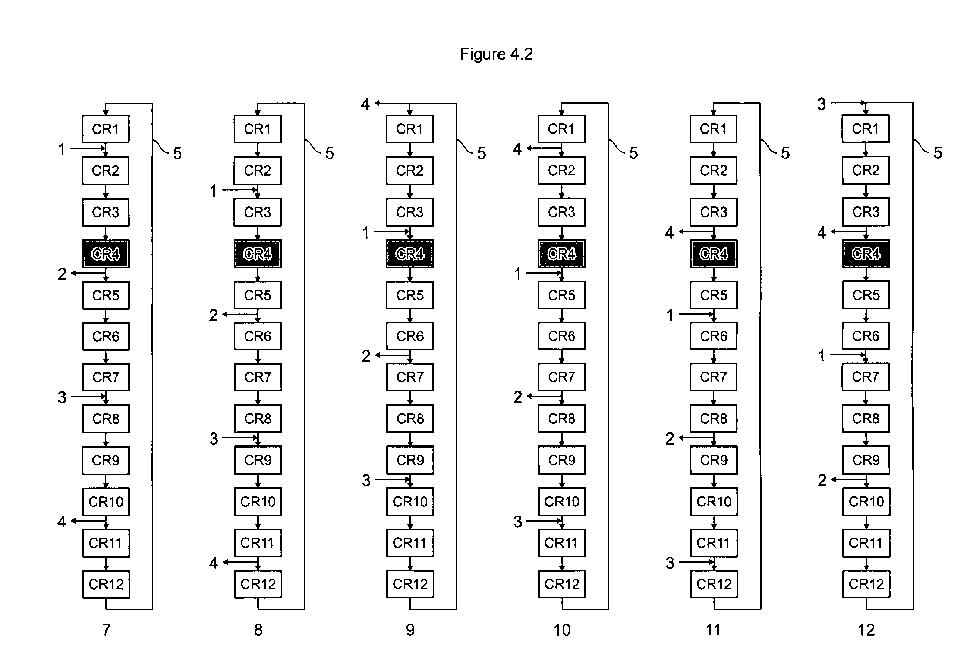

Les figures 4.1 et 4.2 représentent le principe de fonctionnement d'une unité en lit mobile simulé réactif dont on cherche à modéliser le comportement au moyen du dispositif selon l'invention dans sa seconde variante. Cette unité comprend 12 lits remplis d'un mélange d'adsorbant et de catalyseur ( notés CR1 à CR12). Cette unité est spécifiquement adaptée au cas d'une réaction conduisant à deux produits ou plus dans laquelle on cherche à récupérer dans l'extrait (E) le produit le plus retenu aussi pur que possible.

## DESCRIPTION SOMMAIRE DE L'INVENTION

La présente invention consiste en un dispositif expérimental permettant l'étude des procédés fonctionnant en lit mobile simulé réactif, ledit dispositif étant associé à un modèle qui permet l'exploitation des résultats à des fins de dimensionnement d'une unité industrielle ou pilote fonctionnant en lit mobile simulé réactif.

La présente invention se décline selon deux variantes.

Dans la première variante représentée par la figure 1, le système comprend une première colonne (C4) remplie d'adsorbant et une seconde colonne (R6) remplie de catalyseur, les deux colonnes pouvant fonctionner dans des conditions opératoires différentes. La première colonne est appelée colonne d'adsorption, et la seconde colonne est appelée colonne réactive.

Cette première variante correspond au cas d'une réaction conduisant à un effluent unique (par ex. A ⇔ B), ou bien au cas où les conditions opératoires de la réaction sont très différentes de celles de la séparation.

Dans cette première variante, la zone réactive est donc séparée de la zone d'adsorption.

Dans le cas d'une réaction équilibrée conduisant à un seul effluent, la colonne réactive peut être court-circuitée au moyen de la ligne (7), de manière à éviter le phénomène de réaction en retour.

Dans la seconde variante représentée par la figure 2, le système comprend une unique colonne remplie d'un mélange adsorbant - catalyseur (CR4). Cette seconde variante correspond à l'ensemble des cas non couverts par la première variante, en particulier le cas assez général d'une réaction conduisant à deux produits ou plus, par exemple A(+B) ⇔ C+D), que l'on désire séparer par adsorption.

Les deux variantes font appel à un certain nombre de bacs de stockage (notés B23 à B34) dont le nombre minimum est au moins égal au nombre de zones de l'unité à étudier, et préférentiellement supérieur au nombre de lits de l'unité à étudier. Les notions de lits et de zones seront clarifiées dans la description détaillée.

Selon la première variante, l'invention peut se définir comme un dispositif expérimental pour l'étude et l'extrapolation d'unité industrielle ou pilote fonctionnant en lit mobile simulé réactif comportant une première colonne (C4) contenant l'adsorbant, une seconde colonne (R6) contenant le catalyseur et une pluralité de bacs (B23 à B34) servant à l'alimentation de la colonne d'adsorption (C4) et au stockage de l'effluent issu de la colonne catalytique (R6), sauf à certaines étapes du cycle où la dite colonne catalytique est court-circuitée au moyen de la ligne (7), le dispositif fonctionnant selon un cycle défini par le fait qu'à chaque étape *n* dudit cycle, à l'exception de la dernière, la colonne d'adsorbant (C4) est alimentée par le contenu du bac ayant été rempli par le flux de sortie de la colonne (R6) ( ou par le flux de sortie de la colonne (C4) lorsque la colonne (R6) est court-circuitée), correspondant à l'étape (*n+1*) du cycle précédent, et par le fait qu'à la dernière étape du cycle, la colonne d'adsorbant (C4) est alimentée par le contenu du bac ayant été rempli par le flux de sortie de la colonne (R6), (ou par le flux de sortie de la colonne (C4) si la colonne (R6) est court-circuitée), correspondant à la première étape du cycle précédent.

Selon la seconde variante, l'invention peut se définir comme un dispositif expérimental pour l'étude et l'extrapolation d'unité industrielle ou pilote fonctionnant en lit mobile simulé réactif dans lequel la colonne contenant l'adsorbant et la colonne contenant le catalyseur sont regroupées en une seule colonne (CR4) contenant un mélange d'adsorbant et de catalyseur, le dit dispositif contenant une pluralité de bacs (B23 à B34) servant à l'alimentation de la colonne (CR4) et au stockage de l'effluent issu de la dite colonne, et le cycle du dispositif étant défini par le fait qu'à chaque étape n dudit cycle, à l'exception de la dernière, la colonne d'adsorbant (CR4) est alimentée par le contenu du bac ayant été rempli par le flux de sortie de la colonne (CR4) correspondant à l'étape (*n+1*) du cycle précédent, et par le fait qu'à la dernière étape du cycle, la colonne d'adsorbant (CR4) est alimentée par le contenu du bac ayant été rempli par le flux de sortie de la colonne (CR4) correspondant à la première étape du cycle précédent.

## DESCRIPTION DETAILLEE DE L'INVENTION

Afin de bien comprendre les différentes étapes d'un cycle et la notion de zones, on précise dans un premier temps la nomenclature employée.

L'abréviation LMS signifie lit mobile simulé. De manière générale, la colonne d'adsorption (appelée aussi adsorbeur) est composée de plusieurs lits identiques, chaque lit étant délimité par un point d'injection et un point de soutirage, sachant que ces points d'injection et de soutirage ne sont utilisés qu'à un certain moment du cycle.

La charge et l'éluant sont injectés en deux points distincts de l'adsorbeur.

Le raffinat et l'extrait sont soutirés en deux points distincts de l'adsorbeur, eux même distincts des deux points d'injection. On appelle zone un ensemble de lits consécutifs délimité à une de ses extrémités par un point d'injection ou de soutirage, et à l'autre extrémité par, respectivement, un point de soutirage ou d'injection.

A tout moment l'adsorbeur est donc parcouru par au moins quatre flux, deux flux d'entrée distincts, généralement la charge (C) et l'éluant (S), et deux flux de sortie distincts, l'extrait (E) et le raffinat (R).

Dans certains cas, il peut exister plusieurs injections d'éluant ou de charge et /ou plusieurs soutirage d'extrait ou de raffinat. Dans la suite de la description, pour des raisons de clarté, on considérera seulement une unité comportant deux points d'injection, l'un pour la charge, l'autre pour l'éluant, et deux points de soutirage, l'un pour l'extrait, l'autre pour le raffinat, donc comportant quatre zones.

Un cycle de LMS se définit à partir d'une position initiale des points d'injection et de soutirage, et correspond au déplacement coordonné de ces points au long de l'adsorbeur, de lit en lit jusqu'à retrouver la position initiale.

Une étape du cycle est définie par un déplacement élémentaire d'un lit des points d'injection et de soutirage le long de l'adsorbeur.

Un cycle comportera donc un nombre fini d'étapes, correspondant au nombre total de lits de l'adsorbeur.

On subdivise généralement l'adsorbeur en zones. Ces zones sont définies de la manière suivante :

Zone 1 : zone de l'adsorbeur située entre l'injection du désorbant et le soutirage de l'extrait ;
Zone 2 : zone de l'adsorbeur située entre le soutirage de l'extrait et l'injection de la charge ;
Zone 3 : zone de l'adsorbeur située entre l'injection de la charge et le soutirage du raffinat ;
Zone 4 : zone de l'adsorbeur située entre le soutirage du raffinat et l'injection du désorbant.

Il s'agit la de la description d'un adsorbeur fonctionnant en 4 zones, mais on peut envisager des unités fonctionnant avec un nombre plus grand de zones, en liaison avec la multiplication des points d'injection ou de soutirage.

Pour la colonne d'adsorption faisant partie du dispositif selon l'invention, la notion de zone se définit par période de temps de la manière suivante:

Zone 4: période de temps comprise entre la fin de l'injection du désorbant et le début du soutirage du raffinat

Zone 3: période de temps comprise entre le début du soutirage du raffinat et la fin de l'injection de la charge

Zone 2: période de temps comprise entre la fin de l'injection de la charge et le début du soutirage de l'extrait

Zone 1: période de temps comprise entre le début du soutirage de l'extrait et la fin d'injection du désorbant.

Pour le dispositif selon l'invention on définit un cycle comme étant la période de temps s'écoulant entre deux injections successives de désorbant.

On peut aussi découper le cycle du dispositif selon l'invention en étapes élémentaires.

A tout moment d'un cycle du dispositif selon l'invention, un des bacs faisant partie du dispositif est utilisé pour alimenter la colonne, et un autre bac distinct du premier, est utilisé pour stoker l'effluent issu de la colonne.

Une étape élémentaire est définie par le changement simultané du bac utilisé pour l'alimentation de la colonne ( dit bac d'alimentation) et du bac utilisé pour le stockage de l'effluent de la colonne ( dit bac de stockage).

Le dispositif selon l'invention comprend :

- une colonne d'adsorbant (C4) et une colonne de catalyseur (R6) dans le cas de la première variante, ou une unique colonne CR4 contenant un mélange de catalyseur et d'adsorbant dans le cas de la seconde variante ;
- une pluralité de bacs de stockages (B23) à (B34). Le nombre minimum de bac est égal au nombre de zones que présente l'unité de séparation réactive en lit mobile simulé réactif que l'on cherche à étudier, généralement quatre zones. De préférence, le nombre de bacs est supérieur au nombre de lits présents dans l'unité en lit mobile simulé réactif que l'on cherche à étudier.
- une pompe placée sur la ligne (3) ou (47) ;
- une pluralité de lignes d'injection (1), (2), reliées à au moins une pompe et une vanne sur chaque ligne (non représentées sur les figures 1 et 2) ;
- une pluralité de lignes de soutirage (9), (10) reliées à au moins un système de régulation de débit (par exemple un régulateur de débit massique non représenté sur les figures 1 et 2) et une vanne sur chaque ligne.

A chaque moment du cycle du dispositif selon l'invention, un des bacs, dit bac d'alimentation, est utilisé pour alimenter la colonne, et un autre bac distinct du bac d'alimentation, dit bac de stockage, est utilisé pour stoker l'effluent issu de la dite colonne (CR4).

Au cours de l'alimentation le contenu du bac d'alimentation est progressivement remplacé par un gaz inerte (par exemple de l'azote, de l'argon ou de l'hélium). Lorsqu'à un autre moment du cycle, ce bac sera utilisé comme bac de stockage, le gaz inerte sera progressivement éliminé.

Le système peut fonctionner à une température comprise entre la température ambiante et 350°C.

Pour cela, on peut chauffer l'ensemble du système dans un unique dispositif de chauffe (par exemple en immergeant le dispositif dans un bain d'huile).

Dans le cas de la première variante, on peut découpler la température du réacteur catalytique du reste du dispositif en employant un second dispositif de chauffe dédié au réacteur. On peut aussi contrôler la température de chaque bac et de chaque colonne indépendamment.

Le dispositif expérimental peut comprendre un système de rinçage de la ligne commune de soutirage du contenu des bacs (47). On évite ainsi la pollution des flux issus des bacs par le fluide stagnant dans cette ligne.

Le système peut comprendre de plus un équipement permettant le rinçage des lignes d'injection (11) à (22) et des lignes de soutirage (35) à (46) du contenu des bacs.

Le dispositif conçu selon la première variante de l'invention comprend avantageusement un système de rinçage de la ligne de court-circuit (7) et de la colonne remplie de catalyseur (R6).

On utilise préférentiellement pour les différentes étapes de rinçage détaillées ci-dessus un liquide qui ne s'adsorbe pas sur l'adsorbant utilisé et ne réagit pas sur le catalyseur ou sur tout autre corps ou espèce présent dans le système.

On peut aussi utiliser tout mélange constitué des espèces présentes dans le système, comme par exemple le désorbant, la charge ou un mélange de ces deux effluents.

Le volume mort obtenu par rinçage peut être soit éliminé, soit réinjecté en un point du système.

Les vannes mises en oeuvre sont avantageusement des vannes tout ou rien.

Afin de suivre le comportement du système, ce dernier comprend avantageusement un dispositif d'analyse en ligne, par exemple par chromatographie en phase gazeuse, placé préférentiellement sur la ligne (8).

On peut aussi effectuer ces analyses sur les lignes (3), (5) ou (47).

Des lignes peuvent être avantageusement placées sur les bacs, afin de pouvoir en soutirer une faible quantité pour analyse.

### Principe de fonctionnement de l'invention selon la première variante

Le principe de l'invention sera mieux compris à l'examen de la figure 1 qui montre un mode de réalisation schématique du dispositif expérimental selon la première variante de l'invention avec une colonne d'adsorption (C4) et une colonne catalytique (R6) distincte de la colonne d'adsorption.

A tout moment d'un cycle du dispositif selon l'invention, un bac de la série des 12 bacs représentés figure 1, est utilisé pour alimenter la colonne C4, et un autre bac distinct du précédent, est utilisé pour stoker l'effluent issu de la colonne C4 ou R6.

Une étape élémentaire est définie par le changement simultané du bac utilisé pour l'alimentation de la colonne et du bac utilisé pour le stockage de l'effluent de la colonne.

Lors du premier cycle on choisit l'ordre de remplissage des bacs, cet ordre étant ensuite maintenu pour les cycles suivants.

Le choix des bacs de stockage au long d'un cycle résulte de celui des bacs d'alimentation selon la règle suivante:

Dans le cas où la colonne catalytique R6 est en fonctionnement, à toute étape n d'un cycle, la colonne d'adsorbant (C4) est alimentée au moyen de la ligne (3) par le contenu du bac qui a été rempli au moyen de la ligne (8) par l'effluent de sortie de la colonne catalytique (R6) correspondant à l'étape ($n+1$) du cycle précédent.

Lors de la dernière étape du cycle, la colonne d'adsorbant (C4) est alimentée au moyen de la ligne (3) par le contenu du bac qui a été rempli au moyen de la ligne (8) par l'effluent de sortie de la colonne catalytique (R6) correspondant à la première étape du cycle précédent.

Dans le cas où la colonne catalytique R6 est court-circuitée, à toute étape $n$ d'un cycle, la colonne d'adsorbant (C4) est alimentée au moyen de la ligne (3) par le contenu du bac qui a été rempli au moyen de la ligne (8) par l'effluent de sortie de la colonne (C4) correspondant à l'étape ($n+1$) du cycle précédent. Lors de la dernière étape du cycle, la colonne d'adsorbant (C4) est alimentée au moyen de la ligne (3) par le contenu du bac qui a été rempli au moyen de la ligne (8) par l'effluent de sortie de la colonne (C4) correspondant à la première étape du cycle précédent.

Dans le cas particulier d'une réaction équilibrée conduisant à un unique produit, on utilise la colonne catalytique R6 seulement pendant une partie du cycle. Selon que l'unique produit est le plus retenu par l'adsorbant ou le moins retenu par l'adsorbant, ce produit est séparé dans l'extrait ou le raffinat respectivement. Ainsi,

- lorsque la colonne (C4) fonctionne en zone 1, 2 ou 4 (cas où le produit de la réaction est le plus retenu par l'adsorbant) ou en zone 1, 3 ou 4 (cas où le produit de la réaction est le moins retenu par l'adsorbant), le flux de sortie de la colonne (C4) est directement introduit dans un bac de stockage, en court-circuitant la colonne de catalyseur (R6) au moyen de la ligne (7).
- en début de période durant laquelle la colonne (C4) fonctionne en zone 3, une partie du flux de sortie de la colonne d'adsorbant (C4) est soutirée par la ligne (10). Ce flux correspond au raffinat.
- durant le reste de la période pendant laquelle la colonne (C4) fonctionne en zone 3, l'effluent de sortie de la colonne (C4) est introduit dans la colonne de catalyseur (R6).

Dans tous les autres cas, et notamment lorsque les conditions opératoires de la colonne d'adsorption (C4) et de la colonne réactive (R6) sont différentes, la colonne catalytique (R6) n'est jamais court-circuitée.

La notion de zone pour le dispositif selon l'invention se définit par des périodes de temps de la manière suivante:

Zone 4: période de temps comprise entre la fin d'injection du désorbant et le début de soutirage du raffinat
Zone 3: période de temps comprise entre le début de soutirage du raffinat et la fin d'injection de la charge
Zone 2: période de temps comprise entre la fin d'injection de charge et le début de soutirage de l'extrait ;
Zone 1: période de temps comprise entre le début de soutirage de l'extrait et la fin d'injection du désorbant.

En début de période durant laquelle la colonne d'adsorbant (C4) fonctionne en zone 1, une partie du flux de sortie des colonnes est soutirée par la ligne (9). Ce flux correspond à l'extrait.

En fin de période durant laquelle la colonne d'adsorbant (C4) fonctionne en zone 1, un flux de désorbant est introduit en entrée de colonne (C4) par la ligne (2), en plus du flux issu d'un des bacs de stockage.

En début de période durant laquelle la colonne d'adsorbant (C4) fonctionne en zone 3, une partie du flux de sortie des colonnes est soutirée par la ligne (10). Ce flux correspond au raffinat.

En fin de période durant laquelle la colonne d'adsorbant (C4) fonctionne en zone 3, un flux de charge est introduit en entrée de colonne (C4) par la ligne (1), en plus du flux issu d'un des bacs de stockage.

La description d'un mode de fonctionnement du dispositif selon l'invention ci-dessous est donnée à titre d'illustration de l'invention, mais ne limite en aucun cas la portée de ladite invention.

<u>Unité à étudier</u>

L'unité à étudier est typiquement une unité de type lit mobile simulé réactif schématisé sur la figure 3, comportant 12 lits d'adsorbant (C1 à C12) et 2 lits de catalyseur (R1 et R2).

Cette unité est adaptée spécifiquement au cas d'une réaction conduisant à un unique produit (par ex. A ⇔ B) où l'on cherche à récupérer le produit le plus retenu pur dans l'extrait E. Les 12 étapes du cycle ont été représentées dans l'ordre de 1 à 12. Chaque étape du cycle correspond à une position des points d'injection et de soutirage le long des différents lits. Chaque étape du cycle correspond corrélativement au déplacement des lits catalytiques R1 et R2

Nous avons choisi une totalité de 12 lits d'adsorbant répartis à raison de trois lits par zone. L'unité permet de faire évoluer la position des lits catalytiques (R1 et R2) afin que ces derniers se localisent toujours au sein de la zone 3 entre le premier et le second lit d'adsorbant pour le lit catalytique R1, et entre le second et le troisième lit d'adsorbant pour le lit catalytique R2.

<u>Dispositif selon l'invention</u>

L'application du dispositif selon l'invention à l'étude de l'unité décrite au paragraphe précédent est illustrée par la figure 1.

Le dispositif est constitué d'une colonne remplie d'adsorbant (C4), d'une colonne remplie de catalyseur (R6), et de douze bacs de stockage (B23 à B34). Le dispositif fonctionne selon le cycle décrit dans le tableau 1.

Chaque colonne du tableau 1 correspond à une étape du cycle au sens du dispositif.

Dans le cas présenté, chaque zone correspond à 3 étapes.

Chaque étape correspond essentiellement au choix d'un bac d'alimentation et d'un bac de soutirage. Par exemple à l'étape 1 le bac 31 est utilisé comme bac de stockage, et le bac 30 est utilisé comme bac d'alimentation.

Le tableau 1 montre une évolution " en diagonale" des bacs d'alimentation et de soutirage qui correspond à la règle:

A toute étape $n$ d'un cycle, la colonne d'adsorbant (C4) est alimentée par le contenu du bac ayant été rempli par l'effluent de sortie de la colonne catalytique ( R6) correspondant à l'étape ($n+1$) du cycle précédent. Lors de la dernière étape du cycle, la colonne d'adsorbant (C4) est alimentée par le contenu du bac ayant été rempli par l'effluent de sortie de la colonne catalytique (R6) correspondant à la première étape du cycle précédent.

EP 1 847 308 A1

**Tableau 1** : Description du cycle suivi par le dispositif selon l'invention et selon la première variante de fonctionnement

| | zone 3 | | | zone 2 | | | zone 1 | | | zone 4 | | |
|---|---|---|---|---|---|---|---|---|---|---|---|---|
| | étape 1 | étape 2 | étape 3 | étape 4 | étape 5 | étape 6 | étape 7 | étape 8 | étape 9 | étape 10 | étape 11 | étape 12 |
| charge 1 | X | X | **O** | X | X | X | X | X | X | X | X | X |
| désorbant 2 | X | X | X | X | X | X | X | X | **O** | X | X | X |
| extrait 9 | X | X | X | X | X | X | **O** | X | X | X | X | X |
| raffinat 10 | **O** | X | X | X | X | X | X | X | X | X | X | X |
| colonne C4 | **O** | **O** | **O** | **O** | **O** | **O** | **O** | **O** | **O** | **O** | **O** | **O** |
| colonne R6 | X | **O** | **O** | X | X | X | X | X | X | X | X | X |
| bac B34 | X | X | X | X | X | X | X | X | **A** | **S** | X | X |
| bac B33 | X | X | X | X | X | X | X | X | X | **A** | **S** | X |
| bac B32 | X | X | X | X | X | X | X | X | X | X | **A** | **S** |
| bac B31 | **S** | X | X | X | X | X | X | X | X | X | X | **A** |
| bac B30 | **A** | **S** | X | X | X | X | X | X | X | X | X | X |
| bac B29 | X | **A** | **S** | X | X | X | X | X | X | X | X | X |
| bac B28 | X | X | **A** | **S** | X | X | X | X | X | X | X | X |
| bac B27 | X | X | X | **A** | **S** | X | X | X | X | X | X | X |
| bac B26 | X | X | X | X | **A** | **S** | X | X | X | X | X | X |
| bac B25 | X | X | X | X | X | **A** | **S** | X | X | X | X | X |
| bac B24 | X | X | X | X | X | X | **A** | **S** | X | X | X | X |
| bac B23 | X | X | X | X | X | X | X | **A** | **S** | X | X | X |
| **A** : bac d'alimentation, **S** : bac de stockage, **O** : utilisé, X : isolé. | | | | | | | | | | | | |

**Principe de fonctionnement du dispositif selon la seconde variante**

Le principe de l'invention sera mieux compris à l'examen de la figure 2 qui montre un mode de réalisation schématique du dispositif expérimental selon la seconde variante de l'invention avec une unique colonne d'adsorption catalytique (CR4).

Rappelons qu'à tout moment d'un cycle du dispositif selon l'invention, un bac de la série des 12 bacs représentés figure 1, est utilisé pour alimenter la colonne CR4, et un autre bac distinct du précédent est utilisé pour stoker l'effluent issu de la colonne CR4.

Une étape élémentaire est définie par le changement simultané du bac utilisé pour l'alimentation de la colonne et du bac utilisé pour le stockage de l'effluent de la colonne CR4.

Lors du premier cycle on choisit l'ordre de remplissage des bacs, cet ordre étant ensuite maintenu pour les cycles suivants.

le choix des bacs de stockage au long d'un cycle résulte de celui des bacs d'alimentation selon la règle suivante:

A toute étape $n$ d'un cycle, la colonne (CR4) est alimentée au moyen de la ligne (3) par le contenu du bac ayant été rempli au moyen de la ligne (8) par l'effluent de sortie de la colonne ( CR4) correspondant à l'étape ($n+1$) du cycle précédent. Lors de la dernière étape du cycle, la colonne (CR4) est alimentée au moyen de la ligne (3) par le contenu du bac ayant été rempli au moyen de la ligne (8) par l'effluent de sortie de la colonne (CR4) correspondant à la première étape du cycle précédent.

Rappelons que la notion de zone pour le dispositif selon l'invention se définit par périodes de temps de la manière suivante:

Zone 4: période de temps comprise entre la fin d'injection du désorbant et le début de soutirage du raffinat
Zone 3: période de temps comprise entre le début de soutirage du raffinat et la fin d'injection de la charge
Zone 2: période de temps comprise entre la fin d'injection de charge et le début de soutirage de l'extrait ;
Zone 1: période de temps comprise entre le début de soutirage de l'extrait et la fin d'injection du désorbant.

En début de période durant laquelle la colonne (CR4) fonctionne en zone 1, une partie du flux de sortie de la colonne est soutirée par la ligne (9). Ce flux correspond à l'extrait.

A la fin de la période durant laquelle la colonne (CR4) fonctionne en zone 1, un flux de désorbant est introduit en entrée de colonne (CR4) par la ligne (2), en plus du flux issu d'un des bacs de stockage.

En début de période durant laquelle la colonne (CR4) fonctionne en zone 3, une partie du flux de sortie de la colonne est soutirée par la ligne (10). Ce flux correspond au raffinat.

En fin de période durant laquelle la colonne (CR4) fonctionne en zone 3, un flux de charge est introduit en entrée de la colonne (CR4) par la ligne (1), en plus du flux issu d'un des bacs de stockage.

La description d'un mode de fonctionnement du dispositif selon l'invention ci-dessous est donné à titre d'illustration de l'invention mais ne limite en aucun cas la portée de ladite invention.

Unité à étudier

L'unité à étudier est une unité de type lit mobile simulé réactif schématisée sur la figure 4, comportant 12 lits remplis d'un mélange d'adsorbant et de catalyseur (CR1 à CR12).

Cette unité est adaptée spécifiquement au cas d'une réaction conduisant à deux produits ou plus (par ex. A (+B) $\Leftrightarrow$ C+D) où l'on cherche à récupérer le produit le plus retenu pur dans l'extrait E. Les 12 étapes du cycle ont été représentées dans l'ordre de 1 à 12. Chaque étape correspond à une position des points d'injection et de soutirage le long des différents lits.

Nous avons choisi une totalité de 12 lits d'adsorbant répartis à raison de trois lits par zone.

Dispositif selon l'invention

L'application du dispositif selon l'invention à l'étude de l'unité décrite au paragraphe précédent est illustrée par la figure 2.

Le dispositif est constitué d'une colonne remplie d'adsorbant et de catalyseur (CR4) et de douze bacs de stockage (B23 à B34). Le dispositif fonctionne selon le cycle décrit dans le tableau 2.

Chaque colonne du tableau 2 correspond à une étape du cycle au sens du dispositif.

Dans le cas présenté, chaque zone correspond à 3 étapes.

Chaque étape correspond essentiellement au choix d'un bac d'alimentation et d'un bac de soutirage. Par exemple, à l'étape 1 le bac 31 est utilisé comme bac de stockage, et le bac 30 est utilisé comme bac d'alimentation. Le tableau 2 montre une évolution " en diagonale" des bacs d'alimentation et de soutirage qui correspond à la règle:

A toute étape n d'un cycle, la colonne (CR4) est alimentée par le contenu du bac ayant été rempli par l'effluent de sortie de la colonne (CR4) correspondant à l'étape ($n+1$) du cycle précédent. Lors de la dernière étape du cycle, la colonne (CR4) est alimentée par le contenu du bac ayant été rempli par l'effluent de sortie de la colonne (CR4) correspondant à la première étape du cycle précédent.

**Tableau 2** : Description du cycle suivi par le dispositif selon l'invention et selon la seconde variante de fonctionnement - Cas d'un cycle où le nombre de bacs est égal au nombre de lits de l'unité lit mobile simulé réactif étudiée.

| | zone 3 | | | zone 2 | | | zone 1 | | | zone 4 | | |
|---|---|---|---|---|---|---|---|---|---|---|---|---|
| | étape 1 | étape 2 | étape 3 | étape 4 | étape 5 | étape 6 | étape 7 | étape 8 | étape 9 | étape 10 | étape 11 | étape 12 |
| charge 1 | X | X | **O** | X | X | X | X | X | X | X | X | X |
| désorbant 2 | X | X | X | X | X | X | X | X | **O** | X | X | X |
| extrait 9 | X | X | X | X | X | X | **O** | X | X | X | X | X |
| raffinat 10 | **O** | X | X | X | X | X | X | X | X | X | X | X |
| colonne CR4 | **O** | **O** | **O** | **O** | **O** | **O** | **O** | **O** | **O** | **O** | **O** | **O** |
| bac B34 | X | X | X | X | X | X | X | X | **A** | **S** | X | X |
| bac B33 | X | X | X | X | X | X | X | X | X | **A** | **S** | X |
| bac B32 | X | X | X | X | X | X | X | X | X | X | **A** | **S** |
| bac B31 | **S** | X | X | X | X | X | X | X | X | X | X | **A** |
| bac B30 | **A** | **S** | X | X | X | X | X | X | X | X | X | X |
| bac B29 | X | **A** | **S** | X | X | X | X | X | X | X | X | X |
| bac B28 | X | X | **A** | **S** | X | X | X | X | X | X | X | X |
| bac B27 | X | X | X | **A** | **S** | X | X | X | X | X | X | X |
| bac B26 | X | X | X | X | **A** | **S** | X | X | X | X | X | X |
| bac B25 | X | X | X | X | X | **A** | **S** | X | X | X | X | X |
| bac B24 | X | X | X | X | X | X | **A** | **S** | X | X | X | X |
| bac B23 | X | X | X | X | X | X | X | **A** | **S** | X | X | X |
| **A** : bac d'alimentation, **S** : bac de stockage, **O** : utilisé, X : isolé. | | | | | | | | | | | | |

Le tableau 3 illustre un dispositif selon l'invention ne contenant que 6 bacs.

Les étapes et les zones étant définies par des évènements différents (les débuts et fins d'injection pour les zones, et les changements de bacs pour les étapes), les zones ne sont pas toujours constituées d'un nombre entier d'étapes.

**Tableau 3** : Description du cycle suivi par le dispositif selon l'invention et selon la seconde variante de fonctionnement - Cas d'un cycle où le nombre de bacs est inférieur au nombre de lits de l'unité lit mobile simulé réactif étudiée.

| | zone 3 | | | zone 2 | | | zone 1 | | | zone 4 | | |
|---|---|---|---|---|---|---|---|---|---|---|---|---|
| | étape 1 | | étape 2 | | étape 3 | | étape 4 | | étape 5 | | étape 6 | |
| charge 1 | X | X | **O** | X | X | X | X | X | X | X | X | X |
| désorbant 2 | X | X | X | X | X | X | X | X | **O** | X | X | X |
| extrait 9 | X | X | X | X | X | X | **O** | X | X | X | X | X |
| raffinat 10 | **O** | X | X | X | X | X | X | X | X | X | X | X |
| colonne CR4 | **O** | **O** | **O** | **O** | **O** | **O** | **O** | **O** | **O** | **O** | **O** | **O** |
| bac B28 | **A** | | **S** | | X | | X | | X | | X | |
| bac B27 | X | | **A** | | **S** | | X | | X | | X | |
| bac B26 | X | | X | | **A** | | **S** | | X | | X | |
| bac B25 | X | | X | | X | | **A** | | **S** | | X | |
| bac B24 | X | | X | | X | | X | | **A** | | **S** | |
| bac B23 | **S** | | X | | X | | X | | X | | **A** | |
| **A** : bac d'alimentation, **S** : bac de stockage, **O** : utilisé, X : isolé. | | | | | | | | | | | | |

Exploitation des résultats du dispositif selon l'invention

Pour exploiter les résultats obtenus à partir du dispositif expérimental selon l'invention en vue de l'étude d'une unité en lit mobile simulé réactif, il est nécessaire d'extrapoler les performances du dispositif selon l'invention en fonction du nombre de bacs de stockage.

En effet, il est connu que le comportement d'une unité en lit mobile simulé est identique à celui d'un dispositif constitué d'une colonne d'adsorbant et d'un nombre élevé de bacs de stockage.

Il a été également montré que l'extrapolation du nombre de bacs de stockage reste valable dans le cas où le dispositif expérimental comporte une zone réactionnelle séparée ou non de la zone d'adsorption, comme c'est le cas du dispositif selon l'invention.

Dans la suite de la description N désigne le nombre de bacs du dispositif selon l'invention et m le nombre de lits d'adsorbant (ou de mélange adsorbant / catalyseur) de l'unité en lit mobile simulé réactif que l'on étudie.

On appelle nk le nombre de bacs extrapolé du dispositif selon l'invention, c'est à dire le nombre de bacs que l'on fait varier à volonté dans les formules permettant de prévoir la performance de l'unité en LMS étudiée P(LMSR) à partir de la performance observée sur le dispositif selon l'invention P(N).

nk est donc différent du nombre réel de bacs N, et lui sera en général supérieur lors de l'extrapolation. On appelle performance P le rendement ou la pureté du ou des produits recherchés, P(N) étant la performance expérimentalement observée sur le dispositif objet de la présente invention, et P(LMSR) la performance projetée de l'unité en lit mobile simulé que l'on étudie.

On connaît expérimentalement la performance du dispositif soit P(N).

On simule la performance de l'unité en LMS à étudier à partir de la performance P(N) en extrapolant avec un nombre de bacs $n_k$ supérieur à N.

On choisit préférentiellement le nombre de bacs nk dans l'extrapolation du dispositif selon l'invention comme un multiple du nombre m, soit nk =m*k.

On calcule l'écart relatif $\Delta$ entre les performances obtenues avec les nombres de bacs (m)k et (m+1)k et, lorsque celui ci est inférieur ou égal à $\varepsilon$%, les performances calculées sont considérées comme égales à celle de l'unité en lit mobile simulé réactif.

Si l'on choisit par exemple la performance de pureté, que l'on note *P(nk)* pour le dispositif selon l'invention avec extrapolation à nk bacs, et $P^{LMSR}$ pour l'unité en lit mobile simulé réactif, dès que la valeur de nk est telle que:

$$\Delta = \frac{P(n_{k+1}) - P(n_k)}{P(n_k)} \leq \varepsilon$$

alors:

$$P(n_{k+1}) \cong P(n_k) \cong P^{LMSR}$$

On choisit généralement ε = 0,01 % , et de manière préférée ε = 0,001 %.

Il est également possible d'utiliser les résultats expérimentaux du dispositif selon l'invention pour établir une relation permettant de calculer l'écart relatif de performances entre le dispositif selon l'invention et l'unité en lit mobile simulé réactif, noté $\Delta_{nk./LMSR}$ en fonction du nombre de bacs $n_k$ choisi.

Si l'on choisit par exemple la performance de pureté que l'on note *P*, cette relation s'écrit :

$$\Delta_{nk/LMSR} = \frac{P(n_k) - P^{LMSR}}{P^{LMSR}} = -a.\exp(-b.n_k) = a.\exp(-b.m.k)$$

dans laquelle *a* et *b* sont deux nombres réels positifs calculés à partir des résultats expérimentaux du dispositif selon l'invention comportant N bacs.

On établit ainsi la relation qui relie les performances du dispositif selon l'invention à celles de l'unité en lit mobile simulé réactif par l'intermédiaire du nombre de bacs $n_k=m.k$ du dispositif.

Si l'on choisit par exemple la performance de pureté que l'on note *P*, cette relation s'écrit :

$$P(n_k) = P^{LMSR}\left(1 - a.\exp(-b.m.k)\right)$$

A partir de cette relation, on estime les performances de l'unité en lit mobile simulé réactif que l'on étudie en donnant à *k* des valeurs suffisamment élevées. En pratique, lorsque *k* est supérieur à 10, et préférentiellement supérieur à 20, les performances calculées pour le dispositif selon l'invention sont égales à celles de l'unité en lit mobile simulé réactif que l'on étudie, c'est à dire que l'écart relatif entre les performances calculées et les performances de l'unité à étudier est inférieur à 0,01% et préférentiellement inférieur à 0,001 %.

EXEMPLE 1

Afin d'illustrer la méthodologie précédemment décrite, on utilise le dispositif selon l'invention pour étudier une unité de séparation/isomérisation de xylènes.

L'unité en lit mobile simulé réactif (qu'on appellera unité LMSR) que l'on cherche à représenter au moyen du dispositif selon l'invention est composée de 24 lits remplis d'adsorbant (zéolithe de type Faujasite X avec échange au Baryum) réparties dans 4 zones : 6 lits dans la première zone, 9 lits dans la seconde zone, 6 lits dans la troisième zone, et 3 lits dans la quatrième zone.

L'unité LMSR étudiée comporte de plus 5 lits remplis de catalyseur ZSM-5 (zéolithe de type MFI) intercalés entre les lits d'adsorbant de la zone 3.

Les lits d'adsorbant et de catalyseur sont de même géométrie : longueur 1,13 m et section interne 3,5 cm$^2$.

La charge, composée à 23,9% de para-xylène, et à 76,1 % d'un mélange d'ortho et de méta-xylène, est introduite avec un débit de 15,455 cm$^3$/min.

Le désorbant (para-diéthyl benzène) est introduit avec un débit de 102,73 cm$^3$/min. On prélève un débit d'extrait de 49,23 cm$^3$/min, et un débit de raffinat de 68,95 cm$^3$/min.

Le débit de zone 1 est de 287,03 cm$^3$/min. La période ou durée d'une étape est de 70,8 secondes.

La température est maintenue à 493 K et la pression est contrôlée de telle sorte qu'on soit en phase liquide en tout point du dispositif.

Cette unité produit un extrait contenant du para-xylène pur à 99,81% avec un rendement (calculé par rapport à la quantité de para-xylène introduit) de 198,2%.

Le dispositif selon l'invention correspond à la variante 1 représentée par la figure 1.

Il est constitué de deux colonnes en série de longueur 1,13 m et de section interne 3,5 cm$^2$, la première (C4) étant remplie d'adsorbant (zéolithe de type Faujasite X avec échange au Baryum), la seconde (R6) étant remplie de catalyseur ZSM-5 (zéolithe de type MFI).

Le dispositif comprend 24 bacs de volume 1,5 litres, soit autant que de lits que comporte l'unité à étudier.

Les bacs et les colonnes sont maintenus à 493 K et la pression est contrôlée de telle sorte qu'on soit en phase liquide en tout point du dispositif.

Le dispositif selon l'invention ne comprend donc que 2 colonnes contre 29 dans l'unité à étudier.

La charge, composée à 23,9% de para-xylène, et à 76,1% d'un mélange d'ortho et de méta-xylène, est introduite avec un débit de 15,455 cm$^3$/min. Le désorbant (para-diéthyl benzène) est introduit avec un débit de 102,73 cm$^3$/min.

On prélève un débit d'extrait de 49,23 cm$^3$/min, et un débit de raffinat de 68,95 cm$^3$/min. Le débit de zone 1 est de 287,03 cm$^3$/min et la période est de 70,8 secondes.

Les flux ne sont pas injectés de façon continue, mais une seule fois par cycle, et le contenu des bacs est réintroduit dans la première colonne.

Le dispositif selon l'invention conduit sans extrapolation aux performances suivantes : une pureté du para-xylène dans l'extrait de 90,13 % et un rendement global en para-xylène de 181,68 %.

Après extrapolation par simulation à 240 bacs, on obtient une pureté de 99,80 % et un rendement de 198,2%, alors que l'unité de lit mobile simulé réactif comportant 24 lits d'adsorbant et 5 lits de catalyseur localisés en zone 3 conduit aux performances suivantes; une pureté de 99,81 % et un rendement en para-xylène de 198,2 %.

La relation entre les performances du dispositif selon l'invention, celles de l'unité en lit mobile simulé réactif et le nombre de bacs $n_k$=24.$k$ du dispositif s'écrit pour la pureté :

$$P(n_k) = P^{LMSR}\left(1 - 0,223.\exp(-0,0356.24.k)\right)$$

Le dispositif selon l'invention, à 24 bacs dans cet exemple, permet donc avec un nombre de colonnes limité à une ou deux, de reproduire les résultats de l'unité à étudier comportant 24 lits, en extrapolant les résultats obtenus avec ledit dispositif au moyen du nombre de bacs, et de s'approcher aussi près que l'on veut des résultats de l'unité à étudier.

EXEMPLE 2

Dans cet exemple, on illustre une variante de la méthode d'exploitation des résultats du dispositif selon l'invention dans laquelle le nombre de bacs du dispositif est inférieur au nombre de lits de l'unité en lit mobile simulé réactif que l'on désire étudier.

L'unité en lit mobile simulé réactif a les mêmes caractéristiques que dans l'exemple 1, soit 24 lits répartis en 4 zones. Cette unité produit un extrait contenant du para-xylène pur à 99,81% avec un rendement (calculé par rapport à la quantité de para-xylène introduit) de 198,2%.

Le dispositif selon l'invention correspond à la variante 1 représentée par la figure 1.

Il est constitué de deux colonnes en série de longueur 1,13 m et de section interne 3,5 cm$^2$, la première (C4) étant remplie d'adsorbant (zéolithe de type Faujasite X avec échange au Baryum), la seconde (R6) étant remplie de catalyseur ZSM-5 (zéolithe de type MFI).

Le dispositif comprend seulement 8 bacs de volume 1,5 litres. Les bacs et les colonnes sont maintenus à 493 K et la pression est contrôlée afin d'opérer en phase liquide en tout point du dispositif.

Le dispositif selon l'invention ne comprend donc que 2 colonnes contre 29 dans l'unité à étudier.

La charge, composée à 23,9% de para-xylène, et à 76,1% d'un mélange d'ortho et de méta-xylène, est introduite avec un débit de 15,455 cm$^3$/min. Le désorbant (para-diéthyl benzène) est introduit avec un débit de 102,73 cm$^3$/min.

On prélève un débit d'extrait de 49,23 cm$^3$/min, et un débit de raffinat de 68,95 cm$^3$/min. Le débit de zone 1 est de 287,03 cm$^3$/min et la période est de 70,8 secondes.

Les flux ne sont pas injectés de façon continue mais une seule fois par cycle, et le contenu des bacs est réintroduit dans la première colonne.

Le dispositif selon l'invention conduit sans extrapolation aux performances suivantes :

une pureté du para-xylène dans l'extrait de 83,07% avec un rendement global en para-xylène de 167,5%.

Après extrapolation par simulation à 240 bacs, on obtient une pureté de 99,80% et un rendement de 198,2%, alors que l'unité de lit mobile simulé réactif comportant 24 lits d'adsorbant et 5 lits de catalyseur localisés en zone 3 conduit aux performances suivantes; une pureté de 99,81% et un rendement en para-xylène de 198,2%.

La relation entre les performances du dispositif selon l'invention, celles de l'unité en lit mobile simulé réactif et le nombre de bacs $n_k = 8.k$ du dispositif s'écrit pour la pureté :

$$P(n_k) = P^{LMSR}\left(1 - 0{,}223.\exp(-0{,}0356.8.k)\right)$$

Le dispositif selon l'invention, à 8 bacs dans cet exemple, permet donc avec un nombre de colonnes limité à une ou deux, de reproduire les résultats de l'unité à étudier à 24 lits, en extrapolant les résultats obtenus avec le dit dispositif au moyen du nombre de bacs, et de s'approcher aussi près que l'on veut des résultats de l'unité à étudier.

## Revendications

1. Dispositif expérimental pour l'étude et l'extrapolation d'unité industrielle ou pilote fonctionnant en lit mobile simulé réactif comportant une première colonne (C4) contenant l'adsorbant, une seconde colonne (R6) contenant le catalyseur et une pluralité de bacs (B23 à B34) servant à l'alimentation de la colonne d'adsorption (C4) et au stockage de l'effluent issu de la colonne catalytique (R6), sauf à certaines étapes du cycle où la dite colonne catalytique est court-circuitée au moyen de la ligne (7), le dispositif fonctionnant selon un cycle défini par le fait qu'à chaque étape n dudit cycle, à l'exception de la dernière, la colonne d'adsorbant (C4) est alimentée par le contenu du bac ayant été rempli par le flux de sortie de la colonne (R6) (ou par le flux de sortie de la colonne (C4) lorsque la colonne (R6) est court-circuitée), correspondant à l'étape (*n+1*) du cycle précédent, et par le fait qu'à la dernière étape du cycle, la colonne d'adsorbant (C4) est alimentée par le contenu du bac ayant été rempli par le flux de sortie de la colonne (R6), (ou par le flux de sortie de la colonne (C4) si la colonne (R6) est court-circuitée), correspondant à la première étape du cycle précédent.

2. Dispositif expérimental pour l'étude et l'extrapolation d'unité industrielle ou pilote fonctionnant en lit mobile simulé réactif selon la revendication 1, dans lequel la colonne contenant l'adsorbant et la colonne contenant le catalyseur sont regroupées en une seule colonne (CR4) contenant un mélange d'adsorbant et de catalyseur, le dit dispositif contenant une pluralité de bacs (B23 à B34) servant à l'alimentation de la colonne (CR4) et au stockage de l'effluent issu de la dite colonne, et le cycle du dispositif étant défini par le fait qu'à chaque étape n dudit cycle, à l'exception de la dernière, la colonne d'adsorbant (CR4) est alimentée par le contenu du bac ayant été rempli par le flux de sortie de la colonne (CR4) correspondant à l'étape (*n+1*) du cycle précédent, et par le fait qu'à la dernière étape du cycle, la colonne d'adsorbant (CR4) est alimentée par le contenu du bac ayant été rempli par le flux de sortie de la colonne (CR4) correspondant à la première étape du cycle précédent.

3. Dispositif selon l'une des revendications 1 ou 2, dans lequel le nombre de bacs est au moins égal au nombre de zones de l'unité fonctionnant en lit mobile simulé réactif que l'on cherche à étudier, et préférentiellement au moins égal au nombre de lits d'adsorbant de l'unité fonctionnant en lit mobile simulé réactif que l'on cherche à étudier.

4. Dispositif selon l'une des revendication 1 ou 2, dans lequel le nombre de bacs est un multiple entier du nombre de lits d'adsorbant de l'unité fonctionnant en lit mobile simulé réactif que l'on cherche à étudier.

5. Application du dispositif selon l'une des revendications 1 à 4 au procédé en lit mobile simulé de séparation des xylènes.

6. Application du dispositif selon l'une des revendications 1 à 4 au procédé en lit mobile simulé de séparation des paraffines linéaires en mélange avec des hydrocarbures branchés et aromatiques,

7. Application du dispositif selon l'une des revendications 1 à 4 au procédé en lit mobile simulé de séparation des oléfines en mélange avec des paraffines

EP 1 847 308 A1

Figure 1

Figure 2

EP 1 847 308 A1

Figure 3.1

EP 1 847 308 A1

Figure 3.2

Figure 4.1

Figure 4.2

**Office européen**

**des brevets**

**RAPPORT DE RECHERCHE EUROPEENNE**

Numéro de la demande

EP 07 29 0469

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | ABUNASSER N., WANKAT P.C.: "One-Column Chromatograph with Recycle Analogous to a Four-Zone Simulated Moving Bed" INDUSTRIAL & ENGINEERING CHEMISTRY RESEARCH, vol. 42, no. 21, 15 octobre 2003 (2003-10-15), pages 5268-5279, XP002413051 | 1,2 | INV. B01D15/18 B01J8/04 G01N30/44 G01N30/46 |
| Y | * le document en entier * ----- | 3-7 | |
| X | US 5 877 373 A (ZINNEN HERMAN A [US] ET AL) 2 mars 1999 (1999-03-02) | 1,2 | |
| Y | * exemples * ----- | 3-7 | |
| A | US 5 744 683 A (DANDEKAR HEMANT W [US] ET AL) 28 avril 1998 (1998-04-28) * colonne 4, ligne 17 - ligne 43 * * colonne 8, ligne 24 - ligne 52 * ----- | 1-7 | |

**DOMAINES TECHNIQUES RECHERCHES (IPC)**

B01D
G01N
B01J

Le présent rapport a été établi pour toutes les revendications

| Lieu de la recherche | Date d'achèvement de la recherche | Examinateur |
|---|---|---|
| Munich | 25 juin 2007 | Fourgeaud, Damien |

**EP 1 847 308 A1**

**ANNEXE AU RAPPORT DE RECHERCHE EUROPEENNE
RELATIF A LA DEMANDE DE BREVET EUROPEEN NO.**

EP 07 29 0469

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-06-2007

| Document brevet cité<br>au rapport de recherche | | Date de<br>publication | Membre(s) de la<br>famille de brevet(s) | | Date de<br>publication |
|---|---|---|---|---|---|
| US 5877373 | A | 02-03-1999 | US<br>US | 6008424 A<br>6137024 A | 28-12-1999<br>24-10-2000 |
| US 5744683 | A | 28-04-1998 | AUCUN | | |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2721528
- US 5449696 A
- US 6005153 A

**Littérature non-brevet citée dans la description**

- **LODE et al.** *Chem. Eng. Sci.,* 2001, vol. 56, 269-291
- **HASHIMOTO et al.** *Biotechnologie et de Bioengenierie,* 1983, vol. 25, 2371-2393
- **ABUNASSER et al.** *Ind. Eng. Chem. Research,* 2003, vol. 42, 5268-5279
- **ABUNASSER ; WANKAT.** *Ind. Eng. Chem. Research,* 2004, vol. 43, 5291-5299
- **MOTA ; ARAÙJO.** *AICHE Journal,* 2005, vol. 51, 1641-1653